# EUROPEAN PATENT APPLICATION

(11) **EP 2 332 797 A1**
(43) Date of publication of application: **15.06.2011**
(21) Application number: 09015287.7
(22) Date of filing: 10.12.2009
(51) Int. Cl.: B60W 10/08, B60W 20/00, B60W 10/02, B60K 6/383, B60K 6/48, B60K 6/543, B60K 7/00, B60W 10/06

(54) **Automobile dual-power automatic transmission box**

(71) Applicant: Motive Power Industry Co., Ltd., Dacun Township, Changhua County 515 (TW)
(72) Inventor: Chen, Ze-Chun, Taitung City Taitung County 950 (TW)
(74) Representative: Statti, Francesco

(57) **Abstract**

An automobile dual-power automatic transmission box (10) supplies two different power sources to a wheel (16) to drive an automobile and includes a first power source (11) for rotating a first drive shaft (111), a second drive shaft (112) rotated by the first drive shaft (111), a third drive shaft (13) for rotating the wheel (16), a second power source, a clutch unit (14) for driving the second power source to rotate the third drive shaft (13) when the wheel speed is less than a predetermined value, or driving the second drive shaft (112) for rotating the third drive shaft (13) if the wheel speed is greater than the predetermined value, and a speed change unit (15) for retarding the second drive shaft (112) if the wheel speed reaches the predetermined value, and the clutch (14) unit will drive the first power source (11) to rotate the third drive shaft (13) until the wheel speed approaches the rotating speed of the third drive shaft (13).

## Description

### Field of the invention

The present invention relates to an automobile dual-power automatic transmission box, in particular to an automobile dual-power automatic transmission box capable of switching a dual-power source smoothly and enhancing its life expectancy.

### Background of the invention

As an automobile hybrid power device applied in a power system of automobiles and motorcycles generally includes an engine and an electric motor, the low-speed startup torque of the engine is insufficient at the time of starting the automobile or motorcycle, and thus an auxiliary power source supplied from an electric motor is generally used for assisting the startup of the engine. If the engine runs at a high speed, then the auxiliary power source of the electric motor will be disconnected, and the engine will provide the power solely to meet the requirements of low gas consumption and high price/performance ratio. Since the price of petroleum keeps rising and the global warming effect becomes increasingly more serious, countries all over the world strive to improve a high energy application efficiency, and environmental protective hybrid electric vehicles have become a major development trend of power systems for the automobiles and motorcycles.

However, if the engine of automobiles and motorcycles is changed instantly from a low speed to a high speed, the power source will be switched from the electric motor to the engine. Since the engine has a greater speed than the speed of the electric motor, the speed difference will produce sudden pauses and transitions when a clutch switches the power sources and result in an unsmooth switching operation. After a long time of use, the clutch may be damaged easily and the using life will be reduced significantly.

In view of the foregoing shortcomings, the inventor of the present invention based on years of experience in the related industry to conduct extensive researches and experiments, and finally developed an automobile dual-power automatic transmission box in accordance with the present invention to achieve the effects of switching a dual-power source smoothly and enhancing its life expectancy.

### Disclosure of the invention

Therefore, it is a primary objective of the present invention to provide an automobile dual-power automatic transmission box capable of achieving the effects of providing a smooth switching operation of a dual-power source and enhancing the using life.

To achieve the foregoing objective, the present invention discloses an automobile dual-power automatic transmission box which supplies two power sources to a wheel to drive a motor vehicle, and the automobile dual-power automatic transmission box comprises: a first power source, for supplying power required for rotating a first drive shaft; a second drive shaft, driven and rotated by the first drive shaft; a third drive shaft, for driving the wheel; a second power source; a clutch unit, for driving the second power source to supply power required for rotating the third drive shaft if the wheel runs at a speed smaller than a predetermined value, and driving the first power source power required for rotating the third drive shaft if the wheel runs at a speed greater than a predetermined value; and a speed change unit, for reducing a rotating speed of the second drive shaft until the rotating speed approaches the rotating speed of the third drive shaft if the wheel runs at a speed equal to the predetermined value, and then the clutch unit can drive the first power source to supply power required for rotating the third drive shaft.

To make it easier for the examiner to understand the objects, characteristics and effects of this invention, we use a preferred embodiment together with the attached drawings for the detailed description of the invention.

### Brief description of the drawings

FIG. 1 is a perspective view of an automobile dual-power automatic transmission box in accordance with the present invention;

FIG. 2 is a cross-sectional view of an automobile dual-power automatic transmission box in accordance with the present invention; and

FIG. 3 is a schematic view of an external look of an automobile dual-power automatic transmission box in accordance with the present invention.

### Description of the preferred embodiments

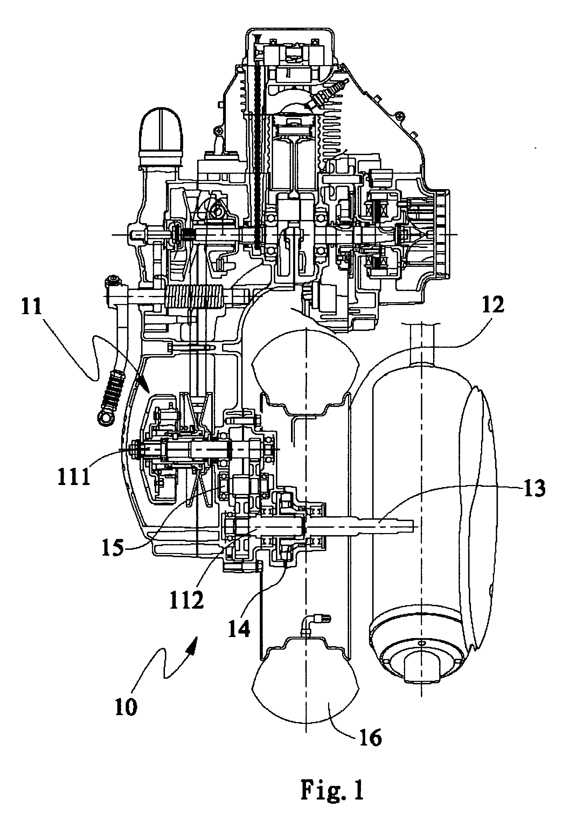

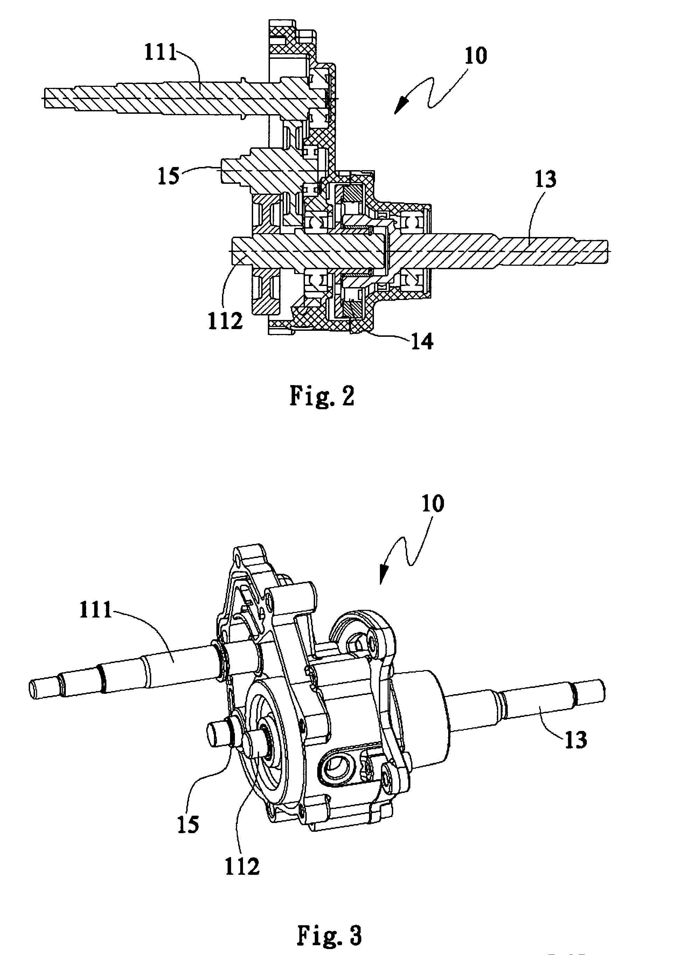

With reference to FIGS. 1 to 3 for a perspective view, a cross-sectional view and a schematic view of an automobile dual-power automatic transmission box in accordance with the present invention respectively, the automobile dual-power automatic transmission box (10) comprises a first power source (11) and a second power source (not shown in the figure) for supplying power required for driving a motor vehicle. The first power source (11) is an internal combustion engine, and the second power source (not shown in the figure) is an electric drive motor installed inside a wheel hub to form a wheel hub motor, or installed at a position near the wheel (16). By switching the two power sources, the motor vehicle can achieve low gas consumption and high performance/price ratio effects. The automobile dual-power automatic transmission box (10) further comprises a first drive shaft (111), a second drive shaft (112), a third drive shaft (13), a clutch unit (14) and a speed change unit (15). The first power source (11) supplies power required for rotating a first drive shaft (111) which is the power output shaft of the internal combustion engine provided for driving the first drive shaft (111) through a transmission belt (not shown in the figure) and an idle gear (not shown in the figure), and then a speed change unit (15) is provided for driving and rotating the second drive shaft (112). The third drive shaft (13) is rotated for driving and rotating a wheel (16) to move the motor vehicle. The clutch unit (14) is provided for controlling a switch between the power sources of the third drive shaft (13) to control the first power source (11) or a second power source (not shown in the figure) in order to control the rotation of the third drive shaft (13). The speed change unit (15) can reduce the rotating speed of the second drive shaft (112) linked and driven by the first power source (11) and the first drive shaft (111).

If the wheel (16) runs at a speed smaller than a predetermined value such as 40 Km/h, it is better to use the electric power supplied by a second power source (not shown in the figure) as the power source, such that the clutch unit (14) will drive the second power source (not shown in the figure) to supply power required for rotating the third drive shaft (13) to move the motor vehicle if the wheel (16) runs at a speed smaller than the predetermined value (40 Km/h). It is better to use the first power source (11) provided by the engine as the power source if the wheel (16) runs at a speed greater than the predetermined value (40 Km/h), and thus the clutch unit (14) will drive the first power source (11), the first drive shaft (111) and the second drive shaft (112) to supply power required for rotating the third drive shaft (13) to drive and move the motor vehicle. If the wheel (16) runs at a speed greater than the predetermined value (40 Km/h), the rotation of the third drive shaft (13) will charge the second power source (not shown in the figure) of the electric drive motor, so that the second power source (not shown in the figure) will not be exhausted.

If the wheel (16) runs at a speed greater than the predetermined value, the clutch unit (14) will be engaged with the second drive shaft (112), so that the second drive shaft (112) drives and rotates the third drive shaft (13) and the wheel (16). The motor vehicle is stopped when a driver press a brake against the wheel (16), and the rotating speed of the second drive shaft (112) is reduced due to a lower rotating speed of the engine driven by the first power source (11). The clutch unit (14) will be separated from the second drive shaft (112). Now, the clutch unit (14) is rotated at the speed equal to the rotating speed of the second drive shaft (112). Since the third drive shaft (13) has a higher speed than the second drive shaft (112), therefore the power supplied by the first power source will not drive the wheel (16). If the speed of the wheel (16) is changed from a speed smaller than the predetermined value to a speed greater than the predetermined value, then the speed change unit (15) of the present invention will assist reducing the rotating speed of the second drive shaft (112) until the rotating speed approaches or equals to the rotating speed of the third drive shaft (113), and then the clutch unit (14) will engage with the second drive shaft (112), and the first power source will supply power required for rotating the third drive shaft (13). Therefore, the sudden pause and transition of the power will not occur anymore, and the switching operation of the power sources becomes smoother and the life expectancy becomes longer.

In addition, the clutch unit (14) can be a one-way clutch, such that when the second power source (not shown in the figure) drives the third drive shaft (13) to rotate, the second drive shaft (112) will not be driven or rotated, so as to prevent the first power source (11) from being consumed or producing resistance.

Both of the first power source (11) and the second power source (not shown in the figure) of the present invention supply power to a single wheel separately. Unlike the conventional structure that simultaneously supplies power to different wheels, the present invention simplifies the assembling procedure of motor vehicles. It is noteworthy to point out that the present invention can be applied to different motor vehicles such as automobiles, motorcycles, and all-terrain cars, etc, but not limited to any particular application only.

In summation of the description above, the automobile dual-power automatic transmission box of the present invention provides a feasible design and complies with patent application requirements, and thus is duly filed for patent application.

While the invention has been described by means of specific embodiments, numerous modifications and variations could be made thereto by those skilled in the art without departing from the scope and spirit of the invention set forth in the claims.

## Claims

1. An automobile dual-power automatic transmission box, for supplying power to a wheel to drive and move an automobile, and comprising;
a first power source, for supplying power required for rotating a first drive shaft;
a second drive shaft, driven and rotated by the first drive shaft;
a third drive shaft, for driving the wheel;
a second power source;
a clutch unit, for driving the second power source to supply power required for rotating the third drive shaft if the wheel runs at a speed smaller than a predetermined value, and driving the first power source power required for rotating the third drive shaft if the wheel runs at a speed greater than a predetermined value; and
a speed change unit, for reducing a rotating speed of the second drive shaft until the rotating speed approaches the rotating speed of the third drive shaft if the wheel runs at a speed equal to the predetermined value, and then the clutch unit can drive the first power source to supply power required for rotating the third drive shaft.

2. The automobile dual-power automatic transmission box of claim 1, wherein the first power source is an internal combustion engine, and the second power source is an electric drive motor.

3. The automobile dual-power automatic transmission box of claim 1, wherein the clutch unit is a one-way clutch.

4. The automobile dual-power automatic transmission box of claim 1, wherein the second power source is installed inside a wheel hub of the automobile.
